# EUROPÄISCHE PATENTANMELDUNG

(11) **EP 4 556 743 A1**
(43) Veröffentlichungstag der Anmeldung: **21.05.2025**
(21) Anmeldenummer: 24207790.7
(22) Anmeldetag: 21.10.2024
(51) Int. Cl.: F16F 1/36, F16F 1/38

(54) **BUCHSE MIT AKTUATOR**

(30) Priorität: 14.11.2023 DE 102023211313
(71) Anmelder: ContiTech Vibration Control GmbH, 30175 Hannover (DE)
(72) Erfinder: Werhahn, Max Konstantin, 30175 Hannover (DE); Kuehne, Lukas, 30175 Hannover (DE); Wedding, Bernard, 30175 Hannover (DE)
(74) Vertreter: Continental Corporation

(57) **Zusammenfassung**

Die vorliegende Erfindung betrifft eine Buchse (1) mit einem Innenteil (10), mit einem Außenteil (12) und mit einem elastischen Element (11), welches wenigstens radial federdämpfend zwischen den Innenteil (10) und dem Außenteil (12) angeordnet ist. Die erfindungsgemäße Buchse (1) ist gekennzeichnet durch wenigstens, vorzugsweise genau, einen Aktuator (13), welcher angeordnet und ausgebildet ist, Kräfte in radialer Richtung (R) auszuüben.

## Beschreibung

Die vorliegende Erfindung betrifft eine Buchse mit Aktuator.

Die Elektrifizierung des Antriebsstranges führt dazu, dass sich das NVH-Verhalten (Noise, Vibration, Harshness) eines Fahrzeuges verändert. Anstelle von Anregungen im niedrigen bis mittleren ein- bis dreistelligen Hertz-Bereich weisen E-Motoren ein Anregungsspektrum bis in den Kilohertz-Bereich auf. Dies führt zu neuartigen NVH-Phänomenen wie Pfeifen etc. Andere NVH-Phänomene, wie z.B. die Fahrbahnanregung, rücken aufgrund des Entfallens der klassischen Verbrenneranregung stärker in den Fokus der Kunden.

Diesen Phänomenen ist in der Vergangenheit mit passiven Lösungen begegnet worden. Diese erfordern teilweise komplexe Design, die zu höheren Kosten, einem vergrößerten Bauraum etc. führen können.

Eine aktive Lösung stellt die Integration eines elektrostriktiven oder magnetostriktiven Aktuators dar, wie in der EP 4 015 271 A1 beschreiben. So beschreibt die EP 4 015 271 A1 eine elastische Lagerung, vorzugsweise ein Motorlager, welche ausgebildet ist, schwingungsübertragend zwischen einem ersten Anschlusselement und einem zweiten Anschlusselement einer schwingungsfähigen Vorrichtung angeordnet zu werden, mit wenigstens einem gummielastischen Federelement, wobei ein elektrostriktiver oder magnetostriktiver Aktuator ausgebildet ist, schwingungserregend auf das gummielastische Federelement zu wirken, und wobei das gummielastische Federelement ausgebildet ist, im Kraftfluss zwischen dem ersten Anschlusselement und dem zweiten Anschlusselement angeordnet zu werden. Der elektrostriktive oder magnetostriktive Aktuator ist ausgebildet, nur teilweise im Kraftfluss, d.h. nur in einem Teil des Kraftflusses, zwischen dem ersten Anschlusselement und dem zweiten Anschlusselement angeordnet zu werden.

Die aktive Lösung der EP 4 015 271 A1 ist in der Lage, das NVH-Verhalten zu verbessern, weist aber einige Nachteile auf. So wird durch die Integration eines (vorgespannten) Aktors zusätzlicher Bauraum benötigt. Auch ist eine Abstützung des Aktors notwendig. Ferner sollte die Integration des Aktors einfach und kostengünstig sein.

Ein weiterer Trend ist, dass vorrangig Buchsen für die Motorlagerung etc. verwendet werden. Dies führt zu Problemen bzw. zu Herausforderungen beim Aktor, da dieser in ein (häufig) eingepresstes, gewölbtes Bauteil mit möglichst geringerem Bauraum und niedrigen Kosten integriert werden muss.

Eine Aufgabe der vorliegenden Erfindung ist es, eine Buchse der eingangs beschriebenen Art bereit zu stellen, so dass die Dämpfung von Schwingungen, insbesondere beim Einsatz in elektrischen Fahrzeugen, verbessert werden kann. Dies soll möglichst einfach, kompakt, leicht, flexibel einsetzbar und bzw. oder kostengünstig erfolgen können. Zumindest soll eine Alternative zu den bekannten Möglichkeiten geschaffen werden.

Die Aufgabe wird erfindungsgemäß durch verschiedene Buchsen sowie durch ein Fahrzeug mit den Merkmalen der unabhängigen Ansprüche gelöst. Vorteilhafte Weiterbildungen sind in den Unteransprüchen beschrieben.

Somit betrifft die vorliegende Erfindung eine Buchse mit einem Innenteil, mit einem Außenteil und mit einem elastischen Element, welches wenigstens radial federdämpfend zwischen den Innenteil und dem Außenteil angeordnet ist. Zusätzlich kann das elastische Element auch axial dämpfend wirken.

Die erfindungsgemäße Buchse ist gekennzeichnet durch wenigstens, vorzugsweise genau, einen Aktuator, welcher angeordnet und ausgebildet ist, Kräfte in radialer Richtung auszuüben. Dabei kann der Aktuator vorzugsweise bogenförmig der zylindrischen Form der Buchse bzw. ihrer Komponenten angepasst ausgebildet sein. Der Aktuator kann jedoch auch punktuell bzw. entlang der Längsachse linienförmig ausgebildet sein, um sich hierdurch der Form bzw. Kontur der Buchse bzw. ihrer Komponenten anzupassen.

Auf diese Art und Weise kann erfindungsgemäß eine radiale Kraft bzw. ein Druck in radialer Richtung mittels der Buchse bzw. mittels dessen Aktuator in die federdämpfende Kraftübertragung eingebracht werden, welche von der Buchse zwischen zwei Verbindungspartner ausgeübt werden kann. Dies kann die Möglichkeiten der Dämpfung und bzw. oder Isolation erhöhen bzw. verbessern. Aufgrund der Integration des Aktuators in die Buchse kann dies kompakt erfolgen. Eine derartige erfindungsgemäße Buchse kann vielseitig für unterschiedliche Anwendungen der Schwingungsdämpfung und bzw. oder Schwingungsisolation eingesetzt werden.

Gemäß einem Aspekt der Erfindung ist der Aktuator am Außenteil radial außenseitig angeordnet und ausgebildet, Kräfte in radialer Richtung zwischen dem Außenteil und einer Buchsenaufnahme auszuüben. Dies kann eine konkrete Möglichkeit der Umsetzung darstellen.

Gemäß einem weiteren Aspekt der Erfindung ist der Aktuator radial innenseitig in einer außenseitigen Aktuatoraufnahme, vorzugsweise in einer außenseitigen Aktuatoraussparung, des Außenteils angeordnet. Dies kann eine konkrete Möglichkeit der Umsetzung darstellen.

Gemäß einem weiteren Aspekt der Erfindung ist der Aktuator radial außenseitig ausgebildet, in einer Aktuatoraufnahme, vorzugsweise in einer Aktuatoraussparung, der Buchsenaufnahme angeordnet zu werden. Dies kann eine konkrete Möglichkeit der Umsetzung darstellen.

Gemäß einem weiteren Aspekt der Erfindung ist der Aktuator am Außenteil radial innenseitig angeordnet und ausgebildet, Kräfte in radialer Richtung zwischen dem Außenteil und dem elastischen Element auszuüben. Dies kann eine konkrete Möglichkeit der Umsetzung darstellen.

Gemäß einem weiteren Aspekt der Erfindung ist der Aktuator radial außenseitig in einer innenseitigen Aktuatoraufnahme, vorzugsweise in einer innenseitigen Aktuatoraussparung, des Außenteils angeordnet. Dies kann eine konkrete Möglichkeit der Umsetzung darstellen.

Gemäß einem weiteren Aspekt der Erfindung ist der Aktuator radial innenseitig in einer außenseitigen Aktuatoraufnahme, vorzugsweise in einer außenseitigen Aktuatoraussparung, des elastischen Elements angeordnet. Dies kann eine konkrete Möglichkeit der Umsetzung darstellen.

Gemäß einem weiteren Aspekt der Erfindung ist der Aktuator in einer durchgehenden Aktuatoraufnahme, vorzugsweise in einer durchgehenden Aktuatoraussparung, des Außenteils radial angeordnet und ausgebildet, Kräfte in radialer Richtung zwischen dem elastischen Element und einer Buchsenaufnahme auszuüben. Dies kann eine konkrete Möglichkeit der Umsetzung darstellen.

Gemäß einem weiteren Aspekt der Erfindung ist der Aktuator radial innenseitig in einer außenseitigen Aktuatoraufnahme, vorzugsweise in einer außenseitigen Aktuatoraussparung, des elastischen Elements angeordnet. Dies kann eine konkrete Möglichkeit der Umsetzung darstellen.

Gemäß einem weiteren Aspekt der Erfindung ist der Aktuator radial außenseitig ausgebildet, in einer Aktuatoraufnahme, vorzugsweise in einer Aktuatoraussparung, der Buchsenaufnahme angeordnet zu werden. Dies kann eine konkrete Möglichkeit der Umsetzung darstellen.

Gemäß einem weiteren Aspekt der Erfindung ist der Aktuator am Innenteil radial außenseitig angeordnet und ausgebildet, Kräfte in radialer Richtung zwischen dem Innenteil und dem elastischen Element auszuüben. Dies kann eine konkrete Möglichkeit der Umsetzung darstellen.

Gemäß einem weiteren Aspekt der Erfindung ist der Aktuator radial außenseitig in einer außenseitigen Aktuatoraufnahme, vorzugsweise in einer außenseitigen Aktuatoraussparung, des Innenteils angeordnet. Dies kann eine konkrete Möglichkeit der Umsetzung darstellen.

Gemäß einem weiteren Aspekt der Erfindung ist der Aktuator radial innenseitig in einer innenseitigen Aktuatoraufnahme, vorzugsweise in einer innenseitigen Aktuatoraussparung, des elastischen Elements angeordnet. Dies kann eine konkrete Möglichkeit der Umsetzung darstellen.

Die Erfindung betrifft auch eine Buchse mit einem Innenteil und mit einem elastischen Element, wobei das elastische Element ausgebildet ist, wenigstens radial federdämpfend zwischen dem Innenteil und einer Buchsenaufnahme angeordnet zu werden, wobei der Aktuator am elastischen Element radial außenseitig angeordnet und ausgebildet ist, Kräfte in radialer Richtung zwischen dem elastischen Element und der Buchsenaufnahme auszuüben. Dies kann einen alternativen Ansatz der vorliegenden Erfindung darstellen, bei dem auf ein Außenteil verzichtet werden kann. Stattdessen kann die erfindungsgemäße Buchse direkt in einer Buchsenaufnahme angeordnet werden und insbesondere radiale Kräfte direkt auf die Buchsenaufnahme ausüben, was auch für den Aktuator gilt

Gemäß einem Aspekt der Erfindung ist der Aktuator radial innenseitig in einer außenseitigen Aktuatoraufnahme, vorzugsweise in einer außenseitigen Aktuatoraussparung, des elastischen Elements angeordnet. Dies kann eine konkrete Möglichkeit der Umsetzung darstellen.

Gemäß einem weiteren Aspekt der Erfindung ist der Aktuator radial außenseitig ausgebildet, in einer Aktuatoraufnahme, vorzugsweise in einer Aktuatoraussparung, der Buchsenaufnahme angeordnet zu werden. Dies kann eine konkrete Möglichkeit der Umsetzung darstellen.

Gemäß einem weiteren Aspekt der Erfindung ist der Aktuator ein elektrostriktiver oder magnetostriktiver Aktuator. Dies kann eine konkrete Möglichkeit der Umsetzung darstellen.

Gemäß einem weiteren Aspekt der Erfindung ist der Aktuator unter radialer Vorspannung angeordnet. Dies kann eine konkrete Möglichkeit der Umsetzung darstellen.

Die vorliegende Erfindung betrifft auch ein Fahrzeug, vorzugsweise ein elektrisches Fahrzeug, mit wenigstens einer Buchse wie zuvor beschrieben. Das Fahrzeug kann insbesondere ein Landfahrzeug und ganz besonders ein Personenkraftfahrzeug (Pkw) oder ein Lastkraftwagen (Lkw) sein. In dem Fall kann auf diese Art und Weise kann eine erfindungsgemäße Buchse bei derartigen Fahrzeugen angewendet und dort dessen Eigenschaften und Vorteile genutzt werden.

Mit anderen Worten kann ein erfindungsgemäßer elektrostriktiver oder magnetostriktiver Aktuator eine weiche bzw. eine sich bewegende bzw. erregende Seite und eine steife bzw. eine sich nicht bewegende bzw. isolierte Seite aufweisen. Der Aktor kann auf einen Teilbereich eines elastischen Elementes wirken. Der Aktor kann eine Kraft oder eine Verschiebung auf bzw. in ein elastisches Element einbringen. Die benötigte Vorspannkraft kann ganz oder teilweise durch den Zusammenbau oder den Einbau des Bauteiles erzeugt und im Betrieb aufrechterhalten werden. Der Aktor kann ganz oder teilweise (geometrisch, zeitlich) als Sensor genutzt werden.

Ein erfindungsgemäßes Produkt bzw. die angedachte Lösung ist vorzugsweise für den Einsatz im E-Auto vorgesehen, um den Komfort bzw. das NVH-Verhalten der Fahrzeuge zu verbessern. Die Lösung kann aber auch in anderen Bereichen der Schwingungsisolation oder ggf. der Schwingungserzeugung im Hochfrequenzbereich genutzt werden. Beispielhaft können hier die Luftfahrbranche, die Schifffahrtsbranche und die Anwendung in Gebäuden und Häusern genannt werden. Die Technologie kann ggf. auf weitere Industrien übertragen werden.

In jedem Fall kann hierdurch eine hochfrequente Anregung und das Aufzeichnen der entsprechenden Systemantwort ermöglicht werden, so dass aus der erfassten Systemantwort Informationen bzw. Rückschlüsse auf eine zu planende Wartung bzw. Reparatur (Predictive Maintenance) gezogen werden können. Auch können hierdurch der Zustand der erfindungsgemäßen Buchse überwacht werden (Condition Monitoring).

Beispielsweise kann die vorliegende Erfindung wie folgt umgesetzt werden:

### Passsitz / Aufnahme der Buchse und des elastischen Elementes (z.B. Buchse ohne Außenteil oder ohne eine Öffnung im Außenteil):

Der Aktuator kann zwischen einen Passsitz bzw. einer Aufnahme der Buchse (z.B. Bohrung im Chassis) und dem Elastomer bzw. dem elastischen Element vorgespannt werden. Dies kann durch eine Öffnung im Außenteil erfolgen, in welche der Aktuator (mit einem Übermaß) eingesetzt wird. Beim Einpressen wird die Vorspannkraft zwischen dem elastischen Element und der Aufnahme der Buchse erzeugt.

Eine alternative Lösung kann bei fehlendem Außenteil (festgelegt durch das Design) durch die Positionierung auf dem Gummi (z.B. in einer Gumminut) bzw. dem elastischen Element und dem anschließenden Einpressen erreicht werden, um die Vorspannkraft aufzubringen. Das Übermaß des Aktuators kann dabei durch zusätzliche Bauteile (z.B. Metallplatten oder Federn) oder den Aktuator selbst zum Einstellen der Vorspannkraft erzeugt werden.

### Aktuator positioniert zwischen Passsitz/ Aufnahme der Buchse und einem partiell elastischem Außenteil, wirkend indirekt auf das elastische Element (z.B. geschwächter Querschnitt, Nut):

Alternativ kann der Querschnitt des Außenteils partiell geschwächt werden (z.B. durch eine Vertiefung). In diese Vertiefung kann der Aktuator vor dem Einpressen eingelegt werden.

Der eingelegte Aktuator kann ein Übermaß aufweisen, welches durch den Aktuator selbst oder durch zusätzliche Bauteile (z.B. Metallplatten oder Federn) erzeugt werden kann. Der geschwächte Querschnitt stellt hierbei eine weiche bzw. eine sich bewegende Seite dar. Diese Seite kann direkt mit dem elastischen Element verbunden sein. Dies kann den Vorteil bieten, dass die Bindungsfläche zwischen Außenteil und elastischem Element nicht reduziert wird und der Aktuator weiterhin indirekt eine Kraft (durch Verformung des Außenteils) einleiten kann. Dies kann Vorteile in Bezug auf die Lebensdauer des Bauteiles bieten. Zusätzlich kann der Aktor vor Scherkräften und Überlasten geschützt werden.

### Aktuator positioniert zwischen Außenteil und des elastischen Elementes:

Eine dritte Ausführungsvariante ergibt sich bei der Positionierung des Aktuators zwischen dem elastischen Element und dem Außenteil. Diese Anordnung kann bereits vor der Endmontage vollständig zusammengebaut werden. Der Aktor kann auf diese Art und Weise zudem vor Witterungseinflüssen geschützt werden. Daraus ergeben sich Vorteile beim Handling bei der Montage. Bei den anderen Varianten könnte dieser Aspekt durch Vergießen oder einen Schutzfilm erreicht werden.

Die Variante kann entweder durch das Einschieben des Aktuators im Montageprozess (Zusammenfügen vom elastischen Element und Außenteil) oder durch das Einschieben des Aktors an einer nicht gebundenen Fläche zwischen elastischem Element und Außenteil erfolgen. Die nicht gebundene Fläche kann dabei mechanisch (Einsetzen eines Dummyelementes in der Vulkanisation oder Auftrennen der Verbindung nach der Vulkanisation) oder chemisch (Aussparen einer Teilfläche mit Haftvermittler oder gezielte Antihaftbeschichtung) erfolgen. Thermisch wäre eine weitere Variante ähnlich dem Profilschneiden von Reifen denkbar

### Aktuator positioniert zwischen Innenteil und elastischem Element:

Eine weitere Ausführungsvariante ergibt sich durch das Vorspannen des Aktuators zwischen dem Innenteil und dem elastischen Element analog zum Vorspannen des Aktuators zwischen Außenteil und elastischem Element. Diese Konfiguration kann den Vorteil bieten, dass Schwingungen näher an der Quelle isoliert werden können und die anschließende Isolationswirkung des elastischen Elementes genutzt werden kann. Ein Nachteil kann sein, dass insgesamt höhere Anregungen bzw. Kräfte zu erwarten sind.

In jedem Fall kann das elastische Element ein Gummielement sein. Das elastische Element kann das Volumen zwischen Außenteil und Innenteil ganz oder teilweise ausfüllen (Vollgummibuchse oder Stegbuchse). Das Außenteil, das Innenteil und die Aufnahme der Buchse sind steifer als das elastische Element und können im Querschnitt (zur Integration des Aktuators) geschwächt sein. Es können mehrere Aktuatoren pro Buchse integriert werden, um das NVH-Verhalten weiter zu verbessern. Der Aktuator kann ganz oder teilweise (geometrisch, zeitlich) als Sensor genutzt werden.

| | |
|---|---|
| Mehrere Ausführungsbeispiele und weitere Vorteile der Erfindung werden nachstehend im Zusammenhang mit den folgenden Figuren erläutert. Darin zeigt: | |
| Fig. 1 | einen schematischen Querschnitt durch eine erfindungsgemäße Buchse mit Aktuator gemäß eines ersten Ausführungsbeispiels; |
| Fig. 2 | einen schematischen Querschnitt durch eine erfindungsgemäße Buchse mit Aktuator gemäß eines zweiten Ausführungsbeispiels; |
| Fig. 3 | einen schematischen Querschnitt durch eine erfindungsgemäße Buchse mit Aktuator gemäß eines dritten Ausführungsbeispiels; |
| Fig. 4 | einen schematischen Querschnitt durch eine erfindungsgemäße Buchse mit Aktuator gemäß eines vierten Ausführungsbeispiels; und |
| Fig. 5 | einen schematischen Querschnitt durch eine erfindungsgemäße Buchse mit Aktuator gemäß eines fünften Ausführungsbeispiels. |

Die Beschreibung der o.g. Figuren erfolgt in zylindrischen Koordinaten mit einer Längsachse X, einer zur Längsachse X senkrecht ausgerichteten radialen Richtung R sowie einer um die Längsachse X umlaufenden Umfangsrichtung U. Die Längsachse X, die radiale Richtung R und die Umfangsrichtung U können gemeinsam auch als Raumrichtungen X, R, U bzw. als zylindrische Raumrichtungen X, R, U bezeichnet werden.

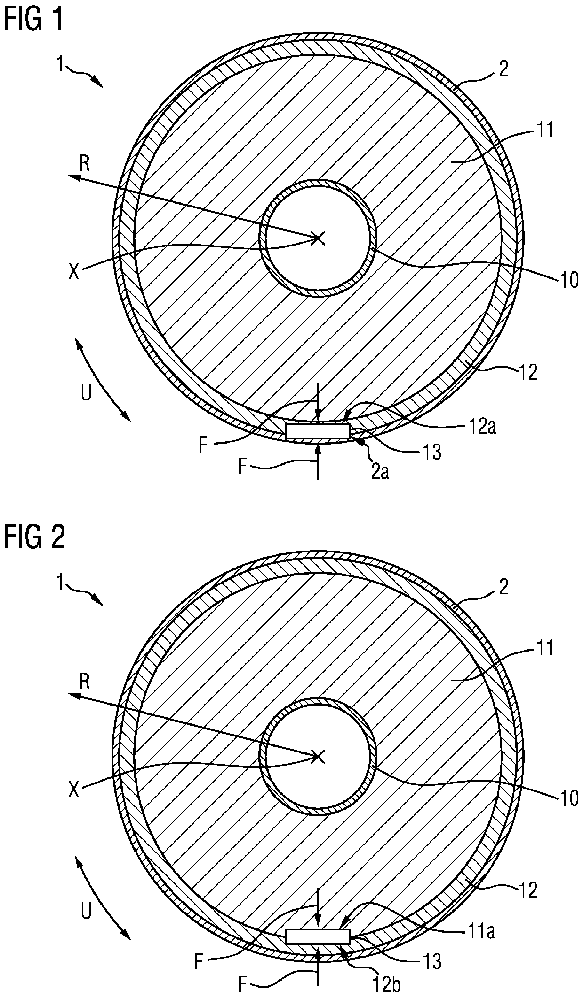

Fig. 1 zeigt einen schematischen Querschnitt durch eine erfindungsgemäße Buchse 1 mit Aktuator 13 gemäß eines ersten Ausführungsbeispiels. Die Buchse 1 weist ein Innenteil 10, ein Außenteil 12 und ein elastisches Element 11 auf, welches radial federdämpfend zwischen den Innenteil 10 und dem Außenteil 12 angeordnet ist. Das elastische Element 11 kann auch als Federelement 11 bezeichnet werden und ist als elastomeres Element 11 ausgebildet. Die Buchse 1 ist in einer Buchsenaufnahme 2 in Form eines Passsitzes 2 angeordnet.

In den erfindungsgemäßen Buchsen 1 aller Ausführungsbeispiele ist jeweils ein Aktuator 13 angeordnet und ausgebildet, Kräfte zumindest im Wesentlichen in radialer Richtung R auszuüben. In jedem Fall ist der Aktuator 13 ein elektrostriktiver oder magnetostriktiver Aktuator 13. Ferner ist der Aktuator 13 in jedem Fall unter radialer Vorspannung angeordnet.

Im ersten Ausführungsspiel der Figur 1 ist der Aktuator 13 radial innenseitig, d.h. zur Längsachse X hinzeigend, in einer außenseitigen Aktuatoraufnahme 12a in Form einer außenseitige Aktuatoraussparung 12a des Außenteils 12 sowie radial gegenüberliegend in einer Aktuatoraufnahme 2a in Form einer Aktuatoraussparung 2a der Buchsenaufnahme 2 bzw. des Passsitzes 2 angeordnet. Dort wird der Aktuator 13 wie bereits erwähnt durch Vorspannkräfte F radial vorgespannt. Der Aktuator 13 kann betrieben werden, um Kräfte in radialer Richtung R gegen die Vorspannkräfte F aufzubringen und so die Dämpfung der Buchse 1 zu beeinflussen.

Fig. 2 zeigt einen schematischen Querschnitt durch eine erfindungsgemäße Buchse 1 mit Aktuator 13 gemäß eines zweiten Ausführungsbeispiels.

In diesem Fall ist der Aktuator 13 radial innenseitig in einer außenseitigen Aktuatoraufnahme 11a in Form einer außenseitigen Aktuatoraussparung 11a des elastischen Elements 11 sowie radial gegenüberliegend in einer innenseitigen Aktuatoraufnahme 12b in Form einer innenseitigen Aktuatoraussparung 12b des Außenteils 12 angeordnet.

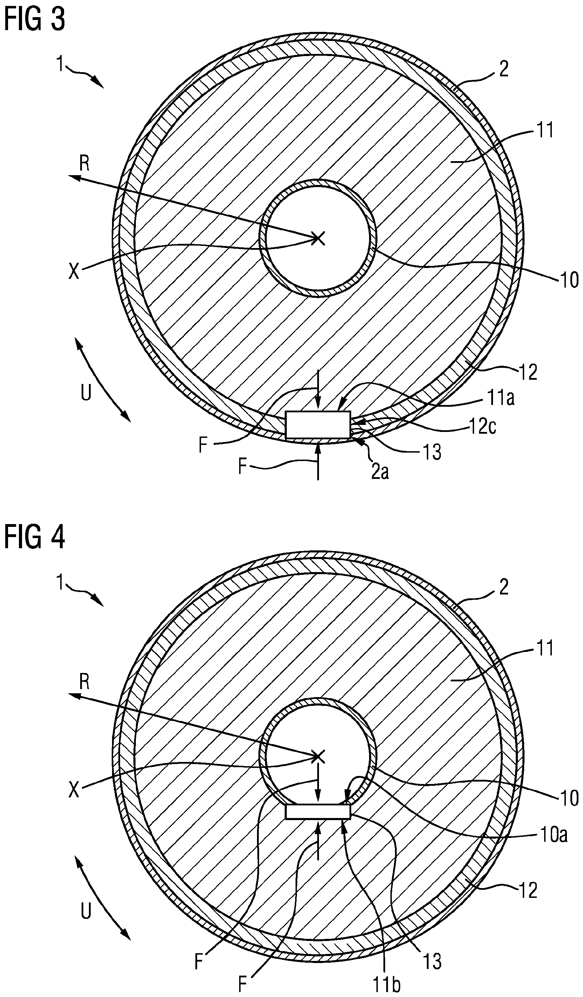

Fig. 3 zeigt einen schematischen Querschnitt durch eine erfindungsgemäße Buchse 1 mit Aktuator 13 gemäß eines dritten Ausführungsbeispiels.

In diesem Fall weist das Außenteil 12 eine radial durchgehende Aktuatoraufnahme 12c in Form einer durchgehenden Aktuatoraussparung 12c auf, in welcher der Aktuator 13 angeordnet ist. Ferner wird der Aktuator 13 radial innenseitig in der außenseitigen Aktuatoraufnahme 11a in Form der außenseitigen Aktuatoraussparung 11a des elastischen Elements 11 sowie radial gegenüberliegend in der Aktuatoraufnahme 2a in Form der Aktuatoraussparung 2a der Buchsenaufnahme 2 bzw. des Passsitzes 2 angeordnet.

Fig. 4 zeigt einen schematischen Querschnitt durch eine erfindungsgemäße Buchse 1 mit Aktuator 13 gemäß eines vierten Ausführungsbeispiels.

In diesem Fall ist der Aktuator 13 radial innenseitig in einer außenseitigen Aktuatoraufnahme 10a in Form einer außenseitigen Aktuatoraussparung 10a des Innenteils 10 sowie radial gegenüberliegend in einer innenseitigen Aktuatoraufnahme 11b in Form einer innenseitigen Aktuatoraussparung 11b des elastischen Elements 11 angeordnet.

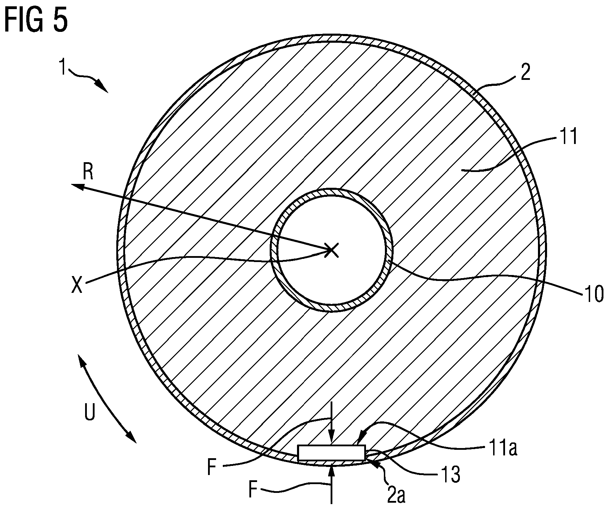

Fig. 5 zeigt einen schematischen Querschnitt durch eine erfindungsgemäße Buchse 1 mit Aktuator 13 gemäß eines fünften Ausführungsbeispiels.

In diesem Fall ist kein Außenteil 12 vorhanden. Entsprechend wird der Aktuator 13 radial innenseitig in der außenseitigen Aktuatoraufnahme 11a in Form der außenseitigen Aktuatoraussparung 11a des elastischen Elements 11 sowie radial gegenüberliegend in der Aktuatoraufnahme 2a in Form der Aktuatoraussparung 2a der Buchsenaufnahme 2 bzw. des Passsitzes 2 angeordnet.

### Bezugszeichenliste (Teil der Beschreibung)

- F: Vorspannkräfte

- R: radiale Richtung
- U: Umfangsrichtung
- X: Längsachse

- 1: Buchse
- 10: Innenteil
- 10a: außenseitige Aktuatoraufnahme bzw. außenseitige Aktuatoraussparung des Innenteils 10
- 11: elastisches Element; Federelement; elastomeres Element
- 11a: außenseitige Aktuatoraufnahme bzw. außenseitige Aktuatoraussparung des elastischen Elements 11
- 11b: innenseitige Aktuatoraufnahme bzw. innenseitige Aktuatoraussparung des elastischen Elements 11
- 12: Außenteil
- 12a: außenseitige Aktuatoraufnahme bzw. außenseitige Aktuatoraussparung des Außenteils 12
- 12b: innenseitige Aktuatoraufnahme bzw. innenseitige Aktuatoraussparung des Außenteils 12
- 12c: durchgehende Aktuatoraufnahme bzw. durchgehende Aktuatoraussparung des Außenteils 12
- 13: (elektrostriktiver oder magnetostriktiver) Aktuator

- 2: Buchsenaufnahme; Passsitz
- 2a: Aktuatoraufnahme bzw. Aktuatoraussparung der Buchsenaufnahme 2

## Patentansprüche

1. Buchse (1)
mit einem Innenteil (10),
mit einem Außenteil (12) und
mit einem elastischen Element (11), welches wenigstens radial federdämpfend zwischen den Innenteil (10) und dem Außenteil (12) angeordnet ist,
**gekennzeichnet durch**
wenigstens, vorzugsweise genau, einen Aktuator (13), welcher angeordnet und ausgebildet ist, Kräfte in radialer Richtung (R) auszuüben.

2. Buchse (1) nach Anspruch 1,
wobei der Aktuator (13) am Außenteil (12) radial außenseitig angeordnet und ausgebildet ist, Kräfte in radialer Richtung zwischen dem Außenteil (12) und einer Buchsenaufnahme (2) auszuüben.

3. Buchse (1) nach Anspruch 2,
wobei der Aktuator (13) radial innenseitig in einer außenseitigen Aktuatoraufnahme (12a), vorzugsweise in einer außenseitigen Aktuatoraussparung (12a), des Außenteils (12) angeordnet ist.

4. Buchse (1) nach Anspruch 2 oder 3,
wobei der Aktuator (13) radial außenseitig ausgebildet ist, in einer Aktuatoraufnahme (2a), vorzugsweise in einer Aktuatoraussparung (2a), der Buchsenaufnahme (2) angeordnet zu werden.

5. Buchse (1) nach Anspruch 1,
wobei der Aktuator (13) am Außenteil (12) radial innenseitig angeordnet und ausgebildet ist, Kräfte in radialer Richtung zwischen dem Außenteil (12) und dem elastischen Element (11) auszuüben.

6. Buchse (1) nach Anspruch 5,
wobei der Aktuator (13) radial außenseitig in einer innenseitigen Aktuatoraufnahme (12b), vorzugsweise in einer innenseitigen Aktuatoraussparung (12b), des Außenteils (12) angeordnet ist.

7. Buchse (1) nach Anspruch 5 oder 6,
wobei der Aktuator (13) radial innenseitig in einer außenseitigen Aktuatoraufnahme (11a), vorzugsweise in einer außenseitigen Aktuatoraussparung (11a), des elastischen Elements (11) angeordnet ist.

8. Buchse (1) nach Anspruch 1,
wobei der Aktuator (13) in einer durchgehenden Aktuatoraufnahme (12c), vorzugsweise in einer durchgehenden Aktuatoraussparung (12c), des Außenteils (12) radial angeordnet und ausgebildet ist, Kräfte in radialer Richtung zwischen dem elastischen Element (11) und einer Buchsenaufnahme (2) auszuüben.

9. Buchse (1) nach Anspruch 8,
wobei der Aktuator (13) radial innenseitig in einer außenseitigen Aktuatoraufnahme (11a), vorzugsweise in einer außenseitigen Aktuatoraussparung (11a), des elastischen Elements (11) angeordnet ist.

10. Buchse (1) nach Anspruch 8 oder 9,
wobei der Aktuator (13) radial außenseitig ausgebildet ist, in einer Aktuatoraufnahme (2a), vorzugsweise in einer Aktuatoraussparung (2a), der Buchsenaufnahme (2) angeordnet zu werden.

11. Buchse (1) nach Anspruch 1,
wobei der Aktuator (13) am Innenteil (10) radial außenseitig angeordnet und ausgebildet ist, Kräfte in radialer Richtung zwischen dem Innenteil (10) und dem elastischen Element (11) auszuüben,
wobei vorzugsweise der Aktuator (13) radial innenseitig in einer innenseitigen Aktuatoraufnahme (11b), vorzugsweise in einer innenseitigen Aktuatoraussparung (11b), des elastischen Elements (11) angeordnet ist.

12. Buchse (1) nach Anspruch 11,
wobei der Aktuator (13) radial außenseitig in einer außenseitigen Aktuatoraufnahme (10a), vorzugsweise in einer außenseitigen Aktuatoraussparung (10a), des Innenteils (10) angeordnet ist.

13. Buchse (1)
mit einem Innenteil (10) und
mit einem elastischen Element (11),
wobei das elastische Element (11) ausgebildet ist, wenigstens radial federdämpfend zwischen dem Innenteil (10) und einer Buchsenaufnahme (2) angeordnet zu werden,
wobei ein Aktuator (13) am elastischen Element (11) radial außenseitig angeordnet und ausgebildet ist, Kräfte in radialer Richtung zwischen dem elastischen Element (11) und der Buchsenaufnahme (2) auszuüben, wobei vorzugsweise der Aktuator (13) radial außenseitig ausgebildet ist, in einer Aktuatoraufnahme (2a), vorzugsweise in einer Aktuatoraussparung (2a), der Buchsenaufnahme (2) angeordnet zu werden.

14. Buchse (1) nach Anspruch 13,
wobei der Aktuator (13) radial innenseitig in einer außenseitigen Aktuatoraufnahme (11a), vorzugsweise in einer außenseitigen Aktuatoraussparung (11a), des elastischen Elements (11) angeordnet ist.

15. Buchse (1) nach einem der vorangehenden Ansprüche,
wobei der Aktuator (13) ein elektrostriktiver oder magnetostriktiver Aktuator (13) ist und/oder
wobei der Aktuator (13) unter radialer Vorspannung angeordnet ist.
